# DEMANDE DE BREVET EUROPEEN

(11) **EP 1 522 532 A1**
(43) Date de publication de la demande: **13.04.2005**
(21) Numéro de dépôt: 03292463.1
(22) Date de dépôt: 06.10.2003
(51) Int. Cl.: C03C 13/06

(54) **Composition de laine minérale**

(71) Demandeur: SAINT-GOBAIN ISOVER, 92400 Courbevoie (FR)
(72) Inventeur: Bernard, Jean-Luc, 60600 Clermont (FR); Bocquet, Eric, Dahlias 60100 Creil (FR)
(74) Mandataire: Cardin, Elise

(57) **Abrégé**

L'invention a pour objet une laine minérale susceptible de se dissoudre dans un milieu physiologique, et qui comprend les constituants ci-après selon les pourcentages pondéraux suivants :

| | |
|---|---|
| SiO₂ | 39-55%, de préférence 40-52% |
| Al₂O₃ | 16-27%, de préférence 16-26% |
| CaO | 9,5 -20%, de préférence 10-18% |
| MgO | 1-5%, de préférence 1-4,9% |
| Na₂O | 0-15%, de préférence 2-12% |
| K₂O | 0-15%, de préférence 2-12% |
| R₂O (Na₂O + K₂O) | 10-14,7%, de préférence 10-13,5% |
| P₂O₅ | 0-3%, notamment 0-2% |
| Fe₂O₃ (fer total) | 1,5-15%, notamment 3,2-8% |
| B₂O₃ | 0-2%, de préférence 0-1% |
| TiO₂ | 0-2%, de préférence 0,4-1% |

## Description

La présente invention concerne le domaine des laines minérales artificielles. Elle vise plus particulièrement les laines minérales destinées à fabriquer des matériaux d'isolation thermique et/ ou acoustique.

Elle s'intéresse plus particulièrement aux laines minérales du type laine de roche, c'est-à-dire dont les compositions chimiques entraînent une température de liquidus élevées et une grande fluidité à leur température de fibrage, associées à une température de transition fibreuse élevée.

Conventionnellement, ce type de laine minérale est fibré par des procédés de centrifugation dits « externes », par exemple du type de ceux utilisant une cascade de roues de centrifugation alimentées en matière fondue par un dispositif de distribution statique, comme décrit notamment dans les brevets EP-0 465 310 ou EP-0 439 385.

Le procédé de fibrage par centrifugation dit " interne ", c'est-à-dire ayant recours à des centrifugeurs tournant à grande vitesse et percés d'orifices, est par contre conventionnellement réservé au fibrage de laine minérale de type laine de verre, schématiquement de composition relativement riche en oxydes alcalins et à faible taux d'alumine, de température de liquidus moins élevée et de viscosité à température de fibrage plus grande que la laine de roche ou de basalte. Ce procédé est notamment décrit dans les brevets EP-0 189 354 ou EP-0 519 797.

Des solutions techniques permettant d'adapter le procédé de centrifugation interne au fibrage de la laine de roche sont connues notamment de WO- 93/02977, par la modification de la composition du matériau constitutif des centrifugeurs et de leurs paramètres de fonctionnement. Cette adaptation permet dès lors de combiner des propriétés qui n'étaient jusque-là inhérentes qu'à l'un ou l'autre des deux types de laine, roche ou verre. Ainsi, la laine de roche obtenue par centrifugation interne est d'une qualité comparable à de la laine de verre, avec un taux d'infibrés moindre que de la laine de roche obtenue conventionnellement. Elle conserve cependant les deux atouts liés à sa nature chimique, à savoir un faible coût de matières chimique et une tenue en température élevée.

Aux critères de qualité et de faisabilité industrielle et économique, s'étant ajouté depuis quelques années celui d'un caractère biodégradable de la laine minérale, à savoir la capacité de celle-ci à se dissoudre rapidement en milieu physiologique, en vue de prévenir tout risque pathogène potentiel lié à l'accumulation éventuelle des fibres les plus fines dans l'organisme par inhalation, une composition de laine minérale de type roche adaptée en conséquence a été proposée dans WO OO/17117. Cette composition détaillée ci-dessous , se caractérise par l'association d'un taux d'alumine élevé avec une quantité d'alcalins (R₂O : soude et potasse) élevée :

| | |
|---|---|
| SiO₂ | 39-55%, de préférence 40-52% |
| Al₂O₃ | 16-27%, de préférence 16-25% |
| CaO | 3-35%, de préférence 10-25% |
| MgO | 0-15%, de préférence 0-10% |
| Na₂O | 0-15%, de préférence 6-12% |
| K₂O | 0-15%, de préférence 3-12% |
| R₂O (Na₂O + K₂O) | 10-17%, de préférence 12-17% |
| P₂O₅ | 0-3%, notamment 0-2% |
| Fe₂O₃ (fer total) | 0-15% |
| B₂O₃ | 0-8%, de préférence 0-4% |
| TiO₂ | 0-4% |

où MgO est compris entre 0 et 5 % lorsque R₂O ≤ 13,0%.

Ce choix de composition qui privilégie la capacité de dissolution en milieu physiologique, se traduit en fait par un affaiblissement du caractère réfractaire de la laine de roche, qui est susceptible de limiter ses propriétés à très haute température.

Dans un mode de réalisation, les compositions possèdent des taux d'oxyde de fer compris entre 5 et 12 %, notamment entre 5 et 8%, ce qui peut permettre d'obtenir une tenue au feu des matelas de laine minérale, propriété typique de la laine de roche traditionnelle.

Toutefois, cette propriété n'est pas illustrée : seules figurent de informations sur la température d'annealing, qui est indicative du domaine de température de service du matériau, mais pas du comportement au feu à très haute température (de l'ordre de 1000 °C).

La présente invention a pour but de procurer un domaine de compositions de laines minérales du type roche, dans lequel les propriétés à haute température, plus particulièrement la résistance au feu, sont maximisées, tout en conservant un caractère biodégradable et une capacité à être fibrée par centrifugation interne.

L'invention a pour objet une laine minérale susceptible de se dissoudre dans un milieu physiologique, qui comprend les constituants ci-après selon les pourcentages pondéraux suivants :

| | |
|---|---|
| SiO₂ | 39-55%, de préférence 40-52% |
| Al₂O₃ | 16-27%, de préférence 16-26% |
| CaO | 9,5 -20%, de préférence 10-18% |
| MgO | 1-5%, de préférence 1-4,9% |
| Na₂O | 0-15%, de préférence 2-12% |
| K₂O | 0-15%, de préférence 2-12% |
| R₂O (Na₂O + K₂O) | 10-14,7%, de préférence 10-13,5% |
| P₂O₅ | 0-3%, notamment 0-2% |
| Fe₂O₃ (fer total) | 1,5-15%, notamment 3,2-8% |
| B₂O₃ | 0-2%, de préférence 0-1% |
| TiO₂ | 0-2%, de préférence 0,4-1% |

(Dans toute la suite du texte, tout pourcentage d'un constituant de la composition doit se comprendre comme un pourcentage pondéral).

La composition selon l'invention repose sur l'association d'un taux d'alumine élevé, compris entre 16 et 27 %, de préférence supérieur à 17 % et/ou de préférence inférieur à 25 %, pour une somme d'éléments formateurs, silice et alumine, comprise entre 57 et 75 %, de préférence supérieur à 60 % et/ou de préférence inférieur à 72 %, avec une quantité d'alcalins (R₂O soude et potasse) relativement élevée mais limitée entre 10 et 13,5 %, avec de la magnésie en quantité au moins égale à 1%.

Bien que ces compositions puissent sembler proches de compositions connues de WO- 00/17117, elles présentent un comportement à très haute température remarquablement amélioré.

Sans vouloir être lié par une quelconque théorie scientifique, il semblerait que ce domaine de composition permette de faire nucléer de germes de cristallisation à basses température, qui provoqueront l'apparition / la croissance de cristaux à une température suffisamment basse où le ramollissement ou le frittage du matériau n'a pas encore pu être effectif. On peut penser que, en faisant cristalliser des composants plus fusibles que la composition vitreuse globale, la viscosité du verre résiduel augmente et les forces de surface à l'oeuvre pour le frittage ne sont plus assez importantes pour l'emporter sur les forces de cohésion visqueuse.

De préférence, l'alumine est présente à raison de 17 à 25,5%, notamment 20 à 25%, en particulier de 21 à 24,5 % en poids, notamment de l'ordre de 22 à 23 ou 24% %.

Avantageusement, une bonne réfractairité peut être obtenue en ajustant la teneur en magnésie, notamment à au moins 1,5%, en particulier 2%, notamment supérieure ou égale à 2,5% ou 3 %. Une teneur élevée en magnésie est favorable à un effet cristallisant à basse température qui s'oppose à la baisse de viscosité généralement observée à température élevée, et empêche donc le frittage du matériau.

Une sélection de composition avantageuse consiste à prévoir une quantité minimale requise de magnésie d'autant plus grande que la quantité d'alumine est faible.

Ainsi, lorsque l'alumine est présente à raison d'au moins 22 % en poids, la quantité de magnésie est de préférence d'au moins 1%, avantageusement de l'ordre de 1 à 4 %, de préférence de 1 à 2%, en particulier de 1,2 à 1,6 %. La teneur en alumine est de préférence limitée à 25% pour conserver une température de liquidus suffisamment basse. Lorsque l'alumine est présente en plus faible quantité, par exemple de l'ordre de 17 à 22 %, la quantité de magnésie est de préférence d'au moins 2 %, notamment de l'ordre de 2 à 5%.

La chaux est avantageusement présente à raison de 11 à 16 %.

La quantité totale de chaux et de magnésie peut être avantageusement de l'ordre de 14 à 20 %, notamment de 15 à 19%.

La quantité de silice est avantageusement de l'ordre de 35 à 50% en poids, notamment 37 à 48%, plus particulièrement de 39 à 44%.

Selon des modes de réalisation de l'invention, le taux d'alcalin est de préférence inférieur ou égal à 13,2 % , voire à 13,0%, notamment de l'ordre de 10 à 12,5 %, en particulier 10,2 à 12% ou moins. La soude, comme la potasse, peuvent être chacune présente à raison de 3 à 9 %en poids.

Dans cette plage de teneurs en alcalins, il se révèle avantageux de choisir un rapport de proportions entre les alcalins et l'alumine, tel que le rapport molaire R₂O / Al₂O₃ est inférieur à 1, en particulier à 0,9, notamment d'au plus 0,8, en particulier d'au plus 0,75.

Lorsque le rapport molaire est supérieur à 0,9 , il est préférable que la teneur en magnésie soit suffisamment élevée pour produire un effet cristallisant à basse température, par exemple d'au moins 2%, ou d'au moins 2,5%, faute de quoi on obtiendrait des températures de transition vitreuse trop faibles, avec un effet néfaste sur le comportement à très haute température.

Un rapport molaire R₂O / Al₂O₃ inférieur à 0,9 produit un effet favorable sur la réfractairité , en particulier à basse température, donc sur le point de ramollissement et la température de frittage.

Dans ce domaine de compositions, on conserve néanmoins un écart suffisamment important entre la température correspondant à la viscosité du fibrage et la température de liquidus de la phase qui cristallise et ainsi de bonnes conditions de fibrage.

L'oxyde de fer présent dans la composition a un impact positif sur la nucléation ou la croissance de germes à basse température tout en limitant le liquidus. Cependant, sa quantité est de préférence limitée pour ne pas pénaliser la biosolubilité en milieu acide. Selon un mode de réalisation préférée de l'invention, les compositions possèdent des taux d'oxyde de fer compris entre 2 et 6 %, de préférence de l'ordre de 3 à 6%.

L'oxyde de titane procure un effet très sensible sur la nucléation à haute et à basse température de spinelles dans la matrice vitreuse. Une teneur de l'ordre de 1 % ou moins peut se révéler avantageuse.

P₂O₅ peut être utilisé, à des teneurs comprises entre 0 et 3 %, notamment entre 0,1 et 1,2 % pour augmenter la biosolubilité à pH neutre.

D'autres oxydes tels que BaO, SrO, MnO, Cr₂O₃, ZrO₂, peuvent être présents dans la composition, chacun jusqu'à des teneurs de 2% environ.

La différence entre la température correspondant à une viscosité de 10^{2,5} poises (decipascal.seconde), notée T_{log 2,5} et le liquidus de la phase qui cristallise, notée T_{Liq} est de préférence d'au moins 10°C. Cette différence, T_{log 2,5} - T_{Liq} définit le "palier de travail" des compositions de l'invention, c'est-à-dire, la gamme de températures dans laquelle on peut fibrer, par centrifugation interne tout particulièrement. Cette différence s'établit de préférence à au moins 10, 20 ou 30°C, de préférence 40°C et même à plus de 50°C, notamment plus de 100°C.

Les compositions sont bien adaptées au procédé de fibrage par centrifugation interne, avec une viscosité à la température de 1400°C de plus de 70 poises, notamment de l'ordre de 75 à 250 poises.

Les compositions suivant l'invention ont des températures de transition vitreuse élevées, notamment supérieures à 600°C, en particulier supérieures ou égales à 650°C. Leur température d'annealing (notée T_{Annealing}, connue également sous le nom de "température de recuisson") est largement supérieure à 600°C, notamment de l'ordre de 670°C ou plus, souvent de 700°C ou plus.

La résistance au feu de produits peut être qualifiée par une mesure de retrait et/ou de déformation par fluage du produit à une température au dessus de 700°C jusqu'à 1000°C.

Elle est assez bien corrélée à la mesure du retrait par frittage à haute température sur poudre fine compactée. Les compositions selon l'invention se caractérisent par un retrait à 700°C de moins de 40% , notamment de l'ordre de 20 à 40%, ou mieux de moins de 20%, et par un retrait à 800°C de moins de 90% , notamment de l'ordre de 75 à 90%, ou mieux de moins de 75% .

Les laines minérales, comme mentionnées plus haut, présentent un niveau de biosolubilité satisfaisant notamment à pH acide. Elles présentent ainsi généralement une vitesse de dissolution, notamment mesurée sur la silice, d'au moins 30, de préférence d'au moins 40 ou 50 ng/cm² par heure mesurée à pH 4,5.

Ce type de composition, à taux d'alumine et à taux d'alcalins élevés peut être avantageusement fondue dans des fours verriers à flamme ou à énergie électrique.

L'invention concerne également l'utilisation de la laine minérale décrite ci-dessus dans des systèmes constructifs résistants au feu.

On appelle « systèmes constructifs résistants au feu » des systèmes, comprenant généralement des assemblages de matériaux, notamment à base de laine minérale et de plaques métalliques, susceptibles de retarder de manière efficace la propagation de la chaleur ainsi que d'assurer une protection aux flammes et gaz chauds et de conserver une résistance mécanique lors d'un incendie.

Des tests normalisés définissent le degré de résistance au feu, exprimé notamment comme le temps nécessaire pour qu'une température donnée soit atteinte du côté opposé du système constructif soumis à un flux de chaleur, dégagé par exemple par la flamme d'un brûleur ou un four électrique.

On considère qu'un système constructif présente une capacité à résister au feu satisfaisante, notamment s'il est susceptible de répondre aux exigences d'un des essais suivants :
- test pour porte coupe-feu : essais sur plaques de fibres minérales tel que défini dans la norme allemande DIN 18 089 - Teil 1 (ou équivalent).
- Comportement au feu de matériau et d'éléments pour la construction tel que défini dans la norme allemande DIN 4102 (ou équivalent). On considère notamment la norme DIN 4102 - Teil 5 pour les tests en grandeur nature a fin de déterminer la classe de résistance au feu, et/ou la norme DIN 4102 - Teil 8 pour les tests sur échantillons avec un petit banc d'essai.
- Test selon l'essai normalisé OMI A 754 (18) (ou équivalent) qui décrit les exigences générales de essais de résistance au feu pour les applications de type « marine », notamment les cloisonnements de bateaux. Ces essais sont pratiqués sur de échantillons de grande taille, avec de fours de 3 m par 3 m. On peut citer, par exemple, le cas d'un pont en acier où la performance requise dans le cas d'un feu côté isolant est de satisfaire le critère d'isolation thermique pendant au moins 60 minutes.

D'autres détails et caractéristiques avantageuses ressortent de la description ci-après de modes de réalisation préférés non limitatifs.

Le tableau 1 ci-après regroupe les compositions chimiques d'exemples selon l'invention, où figurent également les grandeurs caractéristiques suivantes :
- la température de liquidus (T_{liq}) et la température à laquelle la viscosité est égale à log 3 exprimée en poises (T_{log3}) et égale à log 2,5 exprimée en poises (T_{log2,5}), trois températures exprimées en °C
- la viscosité à 1400°C
- le retrait sur poudre à 700°C et à 800°C
- la température d'affaissement (« annealing ») et la température de transition vitreuse (T_{G}).

Quand la somme de toutes les teneurs de tous les composés est légèrement inférieure ou supérieure à 100%, il est à comprendre que la différence d'avec 100% correspond aux impuretés/composants minoritaires qui ne sont pas toujours analysés ou pas analysables à l'état de traces et/ou n'est due qu'à l'approximation acceptée dans ce domaine dans les méthodes d'analyse utilisées.

Le test de retrait sur poudre vise à quantifier la résistance à la température d'une composition par mesure de la densification de cette matière prise à l'état de poudre. Le protocole en est le suivant :

On broie 160 g de composition dans un broyeur à anneaux pendant 8 minutes, puis on tamise la poudre sur un tamis de 80 µm d'ouverture puis sur un tamis de 40 µm d'ouverture pendant 12 minutes. On mélange la partie de poudre de granulométrie inférieure à 40 µm à 8% en poids d'eau, et on fabrique une pastille à partir de ce mélange. On place sur un support de pressage un corps de pastilleur de diamètre 10 mm chemisé carbure de tungstène et on introduit le contre piston. On pèse et introduit 3,110g du mélange poudre / eau dans le pastilleur, puis on met le piston et on positionner des entretoises de calage de hauteur 37mm entre le corps du pastilleur et la partie supérieure du piston. On presse la poudre en veillant à ce que la partie supérieure du piston soit en appui sur les entretoises. On extrait un échantillon de 28mm de haut et 10 mm de diamètre. On place l'échantillon dans un four sur un support plan, et on porte le four à la température de test dans une plage de fonctionnement 700-1150°C avec une rampe de 360 °C/h. On garde le four à température d'essai pendant 16 h et on laisse refroidir. Sur l'échantillon refroidi, on mesure les diamètres supérieur et inférieur, la hauteur moyenne, et on en déduit un retrait volumique exprimé en %. On note aussi l'aspect général de l'échantillon.

Les compositions selon ces exemples peuvent être fibrées par centrifugation interne, notamment selon l'enseignement du brevet WO 93/02977 précité.

Leurs paliers de travail, définis par la différence T_{Log 2,5} - T_{Liq} sont largement positifs, notamment supérieurs à 50°C, voire même 100°C, et même supérieurs à 150°C.

Les températures de liquidus sont peu élevées, notamment inférieures ou égales à 1200°C et même 1150°C.

Les températures correspondant à des viscosités de 10^{2,5} poises (T_{Log 2,5}) sont compatibles avec l'utilisation d'assiettes de fibrage haute température notamment dans les conditions d'usage décrites dans la demande WO 93/02977.

Les compositions préférées sont notamment celles où T_{Log 2,5} est inférieur à 1350°C, de préférence inférieur à 1300°C.

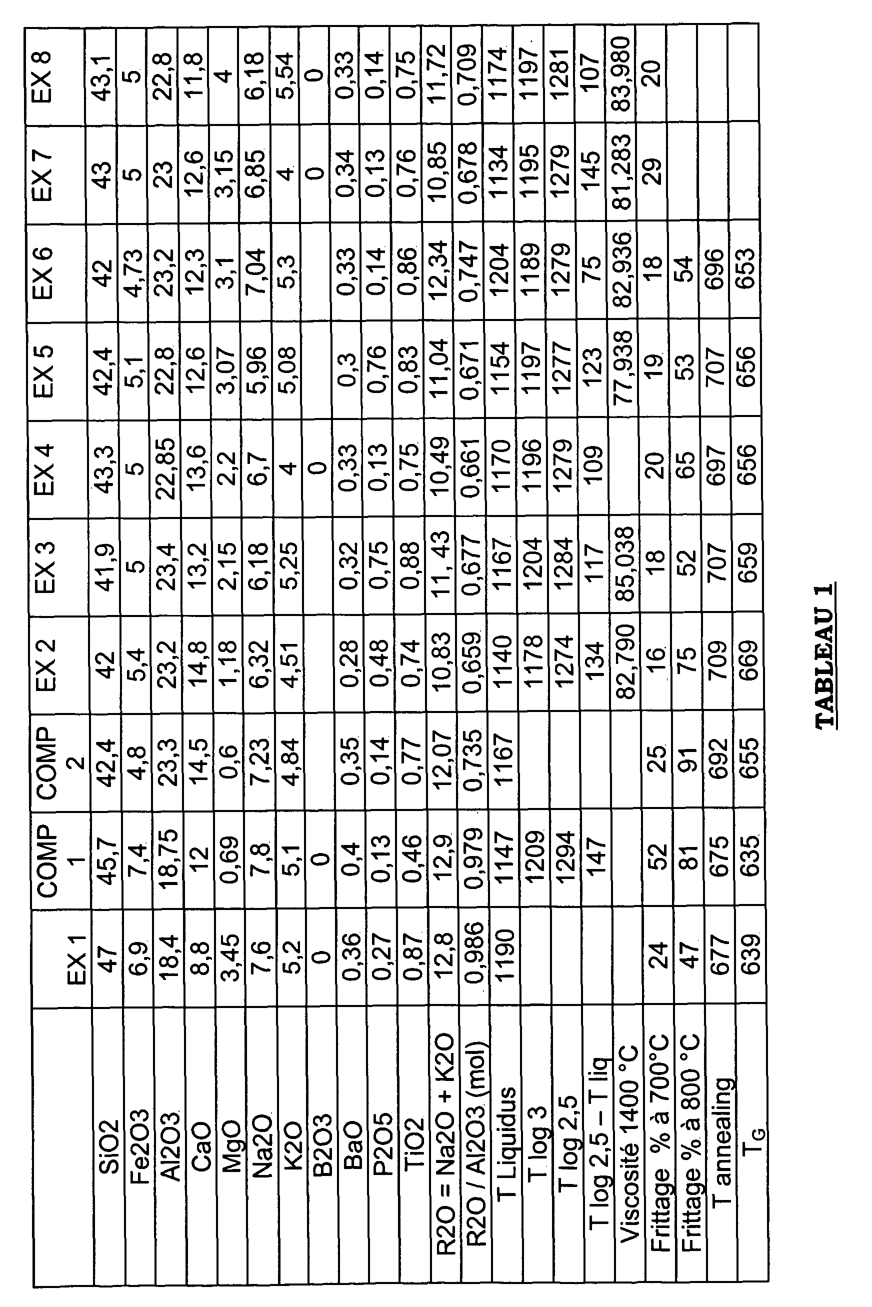

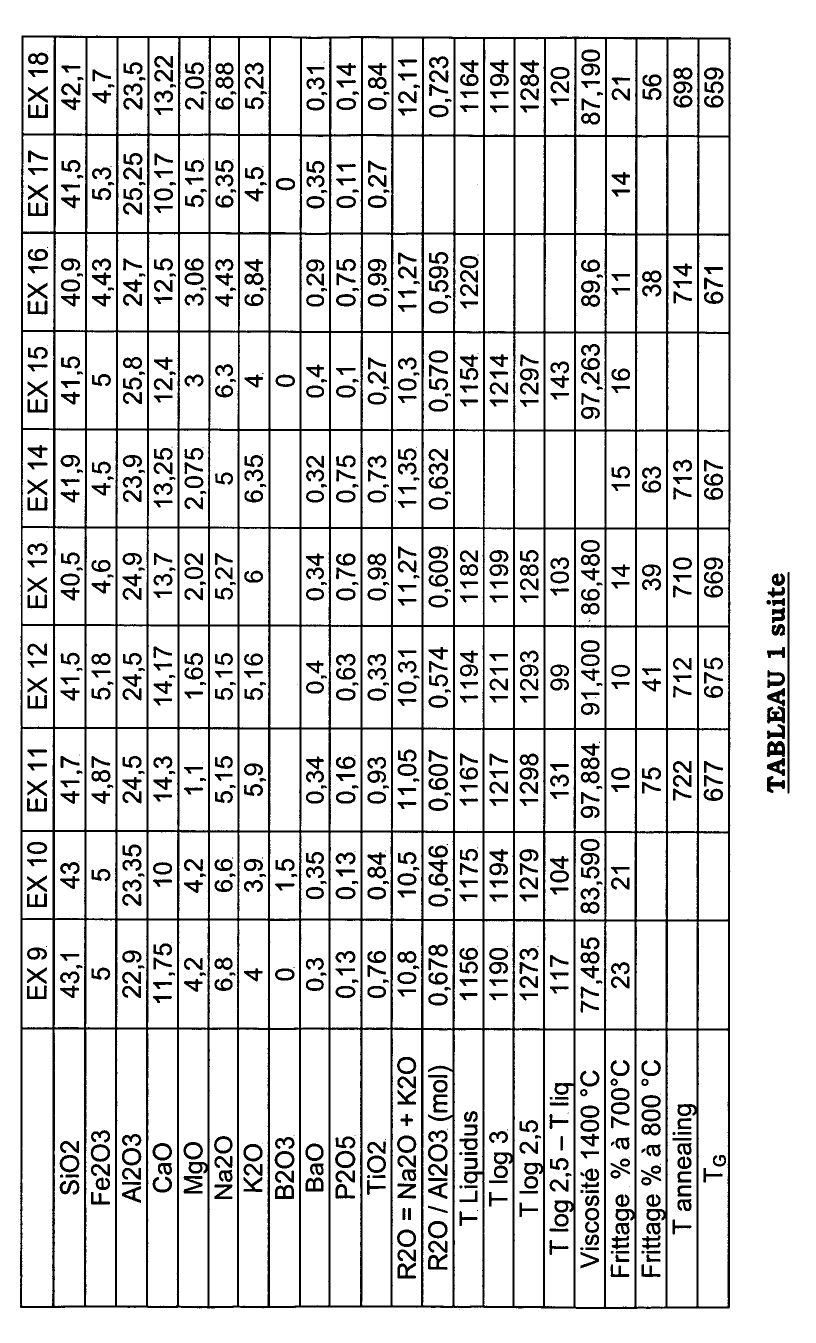

Les compositions des exemples 3, 11, 12 , ainsi que de l'exemple comparatif 2 sont utilisées pour fabriquer un matelas de laine minérale par la technique de centrifugation interne. Les caractéristiques des fibres et de matelas obtenus sont reportés dans le tableau 2 ci-après.

Des échantillons de ces matelas sont prélevés et soumis à un test de stabilité thermique à très haute température dans lequel on mesure l'affaissement des échantillons conformément à la procédure définie sous le projet de norme « Matériaux isolants : stabilité thermique » (Insulating materials : Thermal stability) tel qu'il est proposé par NORDTEST (NT FIRE XX- NORDTEST REMISS N°1114-93). Un échantillon de matériau isolant (notamment de 25 mm de hauteur et de 25 mm de diamètre) est introduit dans un four qui permet l'observation de l'affaissement de l'échantillon en fonction de la température au contact de l'échantillon. La température du four croît de 5°C par minute, à partir de la température ambiante, jusqu'à environ 1000°C ou plus.

On nomme « épaisseur relative » l'épaisseur résiduelle de l'échantillon mesurée à une température donnée, rapportée à l'épaisseur initiale de l'échantillon (à température ambiante). On nomme « taux d'affaissement » la valeur : 1 - « épaisseur relative », à la température donnée.

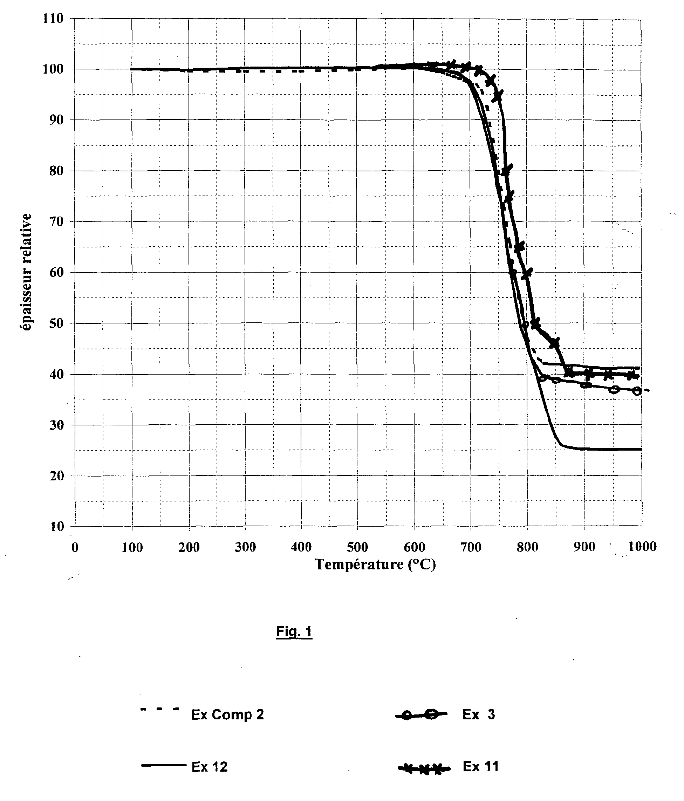

On représente en figure 1 l'évolution de l'épaisseur relative des 4 échantillons de laine minérale en fonction de la température. On constate que l'échantillon de l'exemple comparatif s'affaisse rapidement à partir de 720 °C à 800°C, et que l'épaisseur relative est inférieure à 25 % après 850°C.

En outre, une observation visuelle de l'échantillon après test montre une déformation prononcée, de forme tronconique, avec un diamètre en partie haute de 6 mm et en partie basse de 14 mm.

Les échantillons de laine minérale selon l'invention présentent un affaissement nettement réduit, en conservant mieux leur forme avec moins de perte dimensionnelle radiale par rapport au début du test.

**TABLEAU 2**

| | EX 3 | EX 11 | COMP 2 | EX 12 | COMP 2 |
|---|---|---|---|---|---|
| Finesse des fibres | 12,9 1/min | 12,5 1/min | 13,11/min | 3,3/5g | 3,1 /5g |
| Densité (kg/m3) | 43,3 | 56,4 | 52,0 | 52,2 | 34,3 |
| T° (°C) | 960 | 980 | 930 | 930 | 920 |
| % affaissement | 63 | 60 | 78 | 59 | 75 |
| Diam haut (mm) | 15 | 11 | 6 | 16 | 9 |
| Diam bas (mm) | 21 | 20 | 14 | 22 | 19 |

Il convient de noter que les laines minérales selon l'invention s'appliquent en particulier à des systèmes constructifs tels que décrits ci-dessus, mais trouvent aussi des applications sous toutes les formes connues de matériau isolant destiné à équiper des organes en condition extrême, comme notamment des conduites industrielles surchauffées.

Ainsi, l'invention concerne également des produits isolants sous forme notamment de matelas, rouleaux, panneaux, coquilles. En particulier, l'invention a pour objet un produit en forme de coquille pour l'isolation de conduites, notamment industrielles, comprenant de la laine minérale telle que définie dans la présente demande, dont les fibres présentent un diamètre moyen inférieur ou égal à 4 µm, qui a une densité de 40 à 100 kg/m3, et un taux de liant de l'ordre de 4 à 7 % en poids.

## Revendications

1. Laine minérale susceptible de se dissoudre dans un milieu physiologique, ***caractérisée* en ce *qu'elle*** comprend les constituants ci-après selon les pourcentages pondéraux suivants :
| | |
|---|---|
| SiO₂ | 39-55%, de préférence 40-52% |
| Al₂O₃ | 16-27%, de préférence 16-26% |
| CaO | 9,5 -20%, de préférence 10-18% |
| MgO | 1-5%, de préférence 1-4,9% |
| Na₂O | 0-15%, de préférence 2-12% |
| K₂O | 0-15%, de préférence 2-12% |
| R₂O (Na₂O + K₂O) | 10-14,7%, de préférence 10-13,5% |
| P₂O₅ | 0-3%, notamment 0-2% |
| Fe₂O₃ (fer total) | 1,5-15%, notamment 3,2-8% |
| B₂O₃ | 0-2%, de préférence 0-1% |
| TiO₂ | 0-2%, de préférence 0,4-1% |

2. Laine minérale selon la revendication 1, ***caractérisée* en ce *qu'elle*** contient de 20 à 25% d'alumine.

3. Laine minérale selon l'une des revendications précédentes, ***caractérisée* en ce *qu'elle*** contient au moins 2% , notamment de l'ordre de 2 à 5%, de MgO, quand l'alumine est présente à raison de moins de 22%, notamment de 17 à 22%,***et en ce qu'elle*** contient de 1 à 4%, de préférence de 1 à 2%, de MgO quand l'alumine est présente à raison d'au moins 22 % en poids.

4. Laine minérale selon l'une des revendications 1 à 3, ***caractérisée en ce que*** le taux d'alcalin est de préférence inférieur ou égal à 13,0 %, notamment de l'ordre de 10 à 12,5 %, en particulier 12% ou moins.

5. Laine minérale selon l'une des revendications précédentes, ***caractérisée* en ce *que*** le rapport molaire R₂O / Al₂O₃ est inférieur à 0,9, notamment d'au plus 0,8, en particulier d'au plus 0,75.

6. Laine minérale selon l'une des revendications précédentes, ***caractérisée en* ce *qu'elle*** contient de 2 à 6% d'oxyde de fer.

7. Laine minérale selon l'une des revendications précédentes, ***caractérisée* en ce *qu'elle*** contient 1% ou moins d'oxyde de titane.

8. Laine minérale selon l'une des revendications précédentes, ***caractérisée* en ce *qu'elle*** a une viscosité à la température de 1400°C de plus de 70 poises, notamment de l'ordre de 75 à 250 poises .

9. Laine minérale selon l'une des revendications précédentes, ***caractérisée en ce que*** sa composition présente un retrait à 700°C de moins de 40% et un retrait à 800°C de moins de 90%.

10. Utilisation d'une laine minérale selon l'une des revendications précédentes, dans des systèmes constructifs résistant au feu ou des isolants employés à haute température.
